# EUROPEAN PATENT SPECIFICATION

(11) **EP 0 730 040 B1**
(45) Date of publication and mention of the grant of the patent: **23.12.1998**
(21) Application number: 96102597.0
(22) Date of filing: 21.02.1996
(51) Int. Cl.: C22C 21/02, C22C 21/04, C22C 21/06, C22C 21/08, B60B 27/00

(54) **High-pressure cast aluminum alloy with excellent strength and toughness, method of producing the same and wheel disc used the same**
Aluminium-Druckgusslegierung mit ausgezeichneter Festigkeit und Zähigkeit, Verfahren zur Herstellung derselben und Radscheibe
Alliage d'aluminium coulé sous haute pression présentant une excellente résistance et ténacité, son procédé de fabrication et disque pour roue

(30) Priority: 27.02.1995 JP 63348/95; 22.09.1995 JP 269489/95; 22.11.1995 JP 328245/95
(43) Date of publication of application: 04.09.1996
(73) Proprietor: THE FURUKAWA ELECTRIC CO., LTD., Tokyo (JP)
(72) Inventor: Sakoda, Shoichi, c/o The Furukawa Elec. Co., Ltd., Tokyo 100 (JP); Hideno, Akira, c/o The Furukawa Elec. Co., Ltd., Tokyo 100 (JP); Ohara, Nobuaki, c/o The Furukawa Elec. Co., Ltd., Tokyo 100 (JP)
(74) Representative: TER MEER STEINMEISTER & PARTNER GbR

(56) References cited:
- US-A- 4 169 728
- US-A- 4 605 448
- DATABASE WPI Derwent Publications Ltd., London, GB; AN 94-347494 XP002006801 & JP-A-06 272 001 (FURUKUWA ALUMINIUM KAWASAKI STEEL CORP. ) , 27 September 1994

## Description

### BACKGROUND OF THE INVENTION

The present invention relates to a high-pressure cast aluminum alloy for wheel disc for automobiles. In more detail, it provides an aluminum alloy for wheel disc, wherein, in the 2-piece or 3-piece wheel that bolts or welds a rim and a disc in combination, the strength and toughness improve together and the dispersion of performance inside the product is remarkably reducible over the conventional aluminum alloy castings, a method of producing the same and a wheel disc produced using this alloy.

The wheel for automobiles etc. is one of the important maintenance parts and high reliability is required for the qualities such as strength and impact resistance. Recently, from the viewpoints of running stability of vehicles and lightening of vehicles in weight, the use of aluminum alloy wheel is penetrating in wide range.

The aluminum alloy wheels can be roughly classified structurally into 1-piece wheel and 2-peace or 3-piece wheel. The 1-piece wheel, in which rim portion to be attached with tire and disc portion to become a mounting portion to axle are cast unitedly and finished by machining, has advantages of high rigidity, reduced number of parts, etc. It has however problems that the change of design is not easy or that the management of pouring conditions becomes severer for preventing the structural defects that may become a cause of air leakage on attaching with tire, and the least wall thickness at the rim portion cannot help being made thicker to some extent as well, hence there is a limit naturally for the thinning of wall, making it impossible to aim at sufficient lightening in weight, and the like.

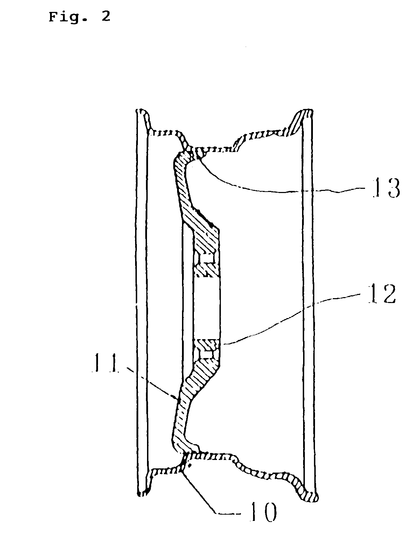

In contrast thereto, the 2-piece or 3-piece wheel is one, wherein, with a rim obtained by flattening rolled plate, a disc produced separately is assembled by welding or bolting. Fig. 2 shows one example of 2-piece wheel, wherein, to the inner face of rim (10) to be attached with tire, the outer circumference of disc (11) to be mounted to axle is welded to fix.

The rim of wheel of this type has an advantage that, since it uses aluminum alloy strip with good accuracy of plate thickness, little internal defects and rich malleability as a prime material, the reliability of air tightness on having attached with tire is high and, even in the case of emergency of colliding with sidewalk etc. during running, it only causes the deformation and reaches no great accident such as damage.

In this way, the 2-piece wheel has an advantage capable of aiming at the lightening in weight even with the same design of disc, since the rim can be made thinner structurally compared with that of 1-piece wheel, but there is a limit naturally for the thinning of wall of rim material from the viewpoint of the moldability of rim. For responding to the demand of additional lightening in weight, therefore, it is also required to simultaneously lighten the wheel disc.

In general, the discs are divided into forged wheel disc and cast wheel disc according to the production method.

The forged wheel disc is being produced usually by forging a continuous cast bar or extruded material of Al-Mg-Si type alloy, in particular, JIS 6061 or 6Nol alloy with good corrosion resistance and also excellent processibility. Such forging has drawbacks that, while it affords high strength and high reliability, the shape-forming freedom is low from the restriction due to molding method and, because of many processes such as preliminary molding, coarse malleating and finish malleating, the retention is poor and the production cost is also high.

On the other hand, since the cast wheel allows to work-in some difference of wall thickness over the forged wheel, it has high shape-forming freedom and is low in cost, but, for achieving high strength and high reliability, it is required to pay close attention to its material quality and production method.

So far, as an aluminum alloy for cast wheel, Al-Si-Mg type JIS-standardized AC4CH alloy has been used widely, in which, from the viewpoints of strength, toughness and corrosion resistance, small amount of Mg is added to the base of Al-Si type alloy with good castability and the heat treatment is given to improve the mechanical properties. And, as a production method therefor, low-pressure casting, wherein, from the viewpoints of decrease in internal defects such as shrinkage cavities and curling and runnability, the melt is filled at low speed and the hot top is pushed at a pressure as low as 0.1 to 0.5 atm, is adopted mainly. However, in the casting method of low solidification velocity like low-pressure casting, the solidification structure (dendrite cell size) becomes coarse and the coarse impurity compounds such as Al-Fe type become liable to crystallize as well, hence there is a problem that high strength and high toughness enough to make the wall thin cannot be obtained, even if heat treatment may be given after pouring.

Recently, for solving this problem, an attempt to overcome the casting problem by high-pressure casting method is made, which is put into practice for some parts by using casting alloys. The high-pressure casting method is characterized in that the melt is filled at low speed and pushed at a high pressure until the completion of solidification, and it is known that the generation of internal defects can be prevented considerably and, because of considerably high solidification velocity, dendrite cell size becomes small as well to improve both strength and elongation.

However, from the fact that these casting alloys are at lower levels of strength and toughness compared with 6000 series alloys such as JIS 6061 used for forging, making it difficult to achieve stabilized performance, it is the present situation that the strength enough to make the wall of wheel disc additionally thin cannot be obtained at low cost. Moreover, in the case of wheel disc, the hub portion (12) with thick wall, as shown in Fig. 2, becomes slower in the solidification velocity compared with outer circumferential portion of disc (hereinafter written as rim portion (13)) and the dendrite cell size becomes large to lower the mechanical performance, hence it is the present situation that the uniform quality is not being achieved throughout the internal portion of product.

The invention was made in view of the problems as described above and the purpose is to provide a high-pressure cast aluminum alloy for 2-piece and 3-piece wheel discs for automobiles, having improved strength and toughness together over conventional cast alloys and equal mechanical performance to forged materials regardless of wall thickness and being low in cost over forged materials, a method of producing the same and a wheel disc used said aluminum alloy.

As a result of extensive investigations on the ingredients of aluminum alloy to be used for high-pressure casting to accomplish the purpose aforementioned, the inventors have known that the AC4CH alloy used widely as a casting alloy is excellent in the internal quality on casting at high pressure, but it has a limit in the mechanical performance and cannot afford the performance beyond the forged goods now in use. Moreover, the inventors have known that the wheel disc is most often joined with rim by welding, thus the weldability is required to some extent.

There, in consequence of additional extensive investigations on the application of malleable alloy that allows to anticipate the improvement in mechanical performance by heat treatment and has good weldability to high-pressure casting, the inventors have known that, by casting an aluminum alloy comprising Si: 0.6 - 1.0 wt. %, Mg: 0.8 - 1.2 wt. %, Cu: 0.1 - 0.5 wt. %, Zn: 0.4 - 1.2 wt. %, Mn: 0.4 - 1.2 wt. %, Ti: 0.01 - 0.20 wt. %, B: 0.002 - 0.04 wt. % and the balance of Al and inevitable impurities at high pressure, high strength and high toughness equal to those of the forging alloys can be obtained and the solidification structure in the internal portion of product becomes uniform and fine regardless of wall thickness, thereby creating low-cost cast wheel disc, while this has the product performance equal to that of forged goods and no problem in the weldability, and, based on these results, the invention has been completed.

### SUMMARY OF THE INVENTION

The high-pressure cast aluminum alloy for wheel disc of the invention is characterized by comprising Si: 0.6 - 1.0 wt. %, Mg: 0.8 - 1.2 wt. %, Cu: 0.1 - 0.5 wt. %, Zn: 0.4 - 1.2 wt. %, Mn: 0.4 - 1.2 wt. %, Ti: 0.01 - 0.20 wt. %, B: 0.002 - 0.04 wt. % and the balance of Al and inevitable impurities. At this time, it is more effective to make the content of Mn over 0.6 wt. % and not more than 1.2 wt. %, and further, as a wheel disc, wheel disc for 2-piece or 3-piece is effective.

Moreover, the method of producing high-pressure cast aluminum alloy for wheel disc of the invention is characterized in that a melt of aluminum alloy comprising Si: 0.6 - 1.00 %, Mg: 0.8 - 1.2 wt. %, Cu: 0.1 - 0.5 wt. %, Zn: 0.4 - 1.2 wt. %, Mn: 0.4 - 1.2 wt. %, Ti: 0.01 - 0.20 wt. %, B: 0.002 - 0.04 wt. % and the balance of Al and inevitable impurities is filled into mold, and then it is solidified under a pressure of 500 kgf/cm² or higher. At this time, it is effective to fill into mold making the temperature of the melt of aluminum alloy to be within the liquidus line temperature of said aluminum alloy plus 100 °C at the sprue portion in said mold.

### BRIEF DESCRIPTION OF THE DRAWING

Fig. 1 is a sectional view showing one example of the high-pressure casting device to be used for the inventive production method.

Fig. 2 is a side sectional view showing one example of 2-piece wheel.

### DETAILED DESCRIPTION OF THE INVENTION

First, the reasons for restricting alloy ingredients will be described below.

The inventive alloy is characterized by having ingredients comprising Si: 0.6 - 1.0 wt. %, Mg: 0.8 - 1.2 wt. %, Cu: 0.1 - 0.5 wt. %, Zn: 0.4 - 1.2 wt. %, Mn: 0.4 - 1.2 wt. %, Ti: 0.01 - 0.20 wt. %, B: 0.002 - 0.04 wt. % and the balance of Al and inevitable impurities.

Here, Si is added to precipitate Mg₂Si by coexisting with Mg on the heat treatment after pouring and to obtain the required strength as a wheel disc. It is required to add 0.6 wt. % or more for Si and 0.8 wt. % or more for Mg, but, if Si exceeds 1.0 wt. % and Mg exceeds 1.2 wt. %, then the corrosion resistance and toughness deteriorate, which is unpreferable.

Cu is effective for the improvement in strength after heat treatment together with Si and Mg, but, if the addition level is under 0.1 wt. %, then sufficient strength cannot be obtained, while, if over 0.5 wt. %, then the weldability and corrosion resistance deteriorate, which is unpreferable.

Zn has effects for forming solid solution in the matrix to improve the strength of matrix itself and for making the texture of solidified cells uniform regardless of wall thickness, thus preventing the lowering of performance at thick wall area as well. But, if the addition level is under 0.4 wt. %, then said uniformalizing effect cannot be achieved enough, and, if exceeding 1.2 wt. %, then the solidification crackings or welding crackings become liable to occur and the corrosion resistance deteriorates as well, which is unpreferable.

Mn forms solid solution partially in the matrix to improve the strength of matrix and becomes rod-like compounds of Al-Fe-Mn type as well by bonding with needle-like Al-Fe type compounds contained as impurities to alleviate the notch effect, resulting in improved toughness. Here, if the addition level is less than 0.4 wt. %, then said effect cannot be obtained, and conversely, if allowing to contain over 1.2 wt. %, then coarse interposing materials generate to deteriorate the mechanical performance, which is unpreferable. Besides, more preferable range to contain Mn is over 0.6 wt. % and not more than 1.2 wt. %.

Ti and B make the cast texture fine to prevent the casting cracking on the surface layer of castings and have an effect for preventing the macro segregation of finally solidified portion as well. Here, if the addition levels are less than 0.01 wt. % and less than 0.002 wt. %, respectively, then said effect cannot be obtained, and conversely, if allowing to contain over 0.20 wt. % and 0.04 wt. %, respectively, then coarse interposing materials generate to deteriorate the mechanical performance, which is unpreferable.

The aluminum alloy concerning with the invention is produced by high-pressure casting and, for stably obtaining uniform texture of solidified cells regardless of wall thickness, it is preferable to make the temperature of melt at the sprue portion just before filling into mold to be within the liquidus line temperature plus 100 °C. Here, if the temperature of melt exceeds the liquidus line temperature plus 100 °C, then not only said effect to uniformalize the texture is difficult to obtain, but also the amount of dissolved hydrogen in melt becomes high, thereby the microporosity becomes liable to generate in the metal texture after solidification. Also, the reliability of product itself decreases, which is unpreferable. On the other hand, if the melt is filled at a temperature below the liquidus line, then the percentage of solid phase becomes high, thereby the casting pressure after filled the melt into mold becomes difficult to propagate and the local shrinkage cavities become liable to occur, which is unpreferable.

Here, the prescription about the amount of dissolved gas that does not generate gas porosity on casting or blow holes on welding is not particularly made, but the pouring or welding can be performed particularly without problem by blowing inert gas into the melt using a commercial rotary degasser, thus making the amount of dissolved hydrogen gas 0.2 cc/100 g or less.

Moreover, the method of stably accommodating the temperature of melt at the sprue portion just before filling into mold to a temperature range within the liquidus line temperature plus 100 °C is not particularly restricted, but, when injecting the melt into injection sleeve by usual ladle supply, means of coating thermal insulating material such as ceramic onto inner face of ladle to prevent the temperature lowering of melt, and the like are considerable. By this method, however, it is inevitable to drag-in the oxidized film on injecting from ladle into injection sleeve, resulting in the mechanical performance becoming unstable. As a transfer method of melt from holding furnace to injection sleeve, therefore, methods of using electromagnetic pump, metal pump, etc. being difficult to cause turbulent flow in the melt and having high injecting speed are desirable.

Moreover, for preventing the temperature lowering of melt in the injection sleeve to the utmost until filling into mold, it is desirable to use an injection sleeve with ceramic lined onto inner face that has higher thermal insulation over usual steel-made one.

Next, upon solidifying the melt filled into mold, it is required to solidify under a high pressure of not lower than 500 kgf/cm². If the casting pressure is under 500 kgf/cm², then the shrinkage cavities and casting crackings occur frequently to remarkably decrease the mechanical performance, in particular, elongation value, which is unpreferable.

Moreover, the heat treatment is given to the alloy of the invention depending on the required performance of final product, but the conditions of heat treatment are not particularly restricted. Namely, by giving the solid solution treatment and temper condition prescribed in JIS Standards depending on the alloy composition of the inventive aluminum alloy, the strength, elongation and toughness can improve considerably.

In following, detailed illustration will be made based on the examples.

### Example 1

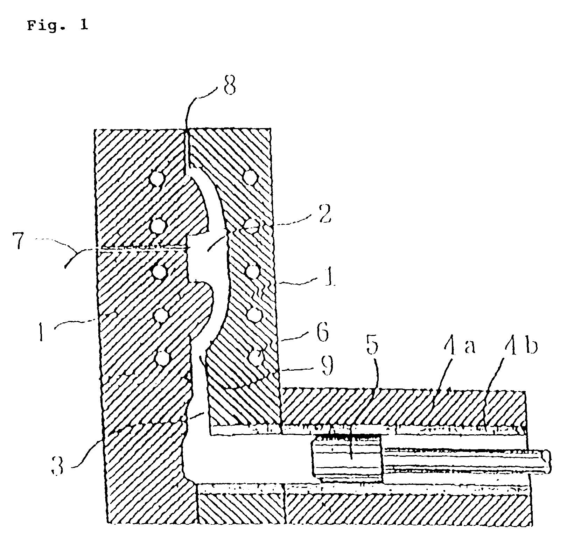

First, for the casting, a casting device shown in Fig. 1 was used. This casting device consists of product portion (wheel disc) (2) and melt-supplying route (3) formed in a mold (1), injection sleeve (4a) receiving a fixed amount of melt and plunger chip (5) oscillating in the injection sleeve and filling and pressurizing the melt in cavity. Here, onto the inner face of injection sleeve, ceramic lining (4b) is provided to prevent the temperature lowering of melt. Through the mold (1), water-cooling pipes (6) are put at regular intervals along the product portion (2) to make a structure that performs water cooling at the time of injection filling. Besides, in the diagram, numeral (8) indicates degassing portion and numeral (9) sprue portion.

Here, aluminum alloys with the compositions shown in Table 1 were molten by usual method and degassing treatment was carried out by Ar gas bubbling for around 20 minutes at a temperature of melt of 700 °C. Then, the pressurized castings were performed at pouring pressures shown in Table 2 to fabricate wheel discs with a diameter of 350 mm and wall thicknesses of 4 to 60 mm. Here, the temperature of melt just before pouring was measured with a thermocouple (7) installed at the product portion (2), after injected the melt into injection sleeve.

The section of these disc castings was polished and the internal defects such as shrinkage cavities and casting crackings were observed under stereomicroscope.

Moreover, after the heat treatment (after solid solution treatment for 8 hours at 530 °C, water-cooling was performed, followed by artificial aging treatment for 8 hours at 150 °C) was given to these discs, tensile test specimen and Charpy test specimen were sampled from each rim portion with the least wall thickness and the tensile strength, yield point, elongation value and Charpy impact value being an index of toughness were measured.

Furthermore, these discs were each welded with 5454 alloy rim by MIG welding (filler material 5356) and the existences of crackings at welded portion and blow holes were judged.

These results are shown collectively in Table 2.

**Table 1**

| Distinction | Alloy No. | Alloy composition (wt. %) | | | | | | | | | Remarks |
|---|---|---|---|---|---|---|---|---|---|---|---|
| | | Si | Fe | Cu | Mn | Mg | Zn | Ti | B | Al | |
| Inventive alloy | 1 | 0.70 | 0.10 | 0.25 | 0.40 | 1.00 | 0.40 | 0.05 | 0.010 | Bal. | |
| | 2 | 0.90 | 0.06 | 0.40 | 0.80 | 1.00 | 0.80 | 0.03 | 0.006 | Bal. | |
| | 3 | 0.90 | 0.06 | 0.40 | 1.10 | 1.00 | 1.10 | 0.03 | 0.006 | Bal. | |
| Comparative alloy | 4 | 0.40 | 0.10 | 0.55 | 0.40 | 0.60 | 0.00 | 0.03 | 0.006 | Bal. | |
| | 5 | 0.70 | 0.10 | 0.30 | 0.01 | 1.00 | 0.00 | 0.02 | 0.004 | Bal. | Corresponding to JIS 6061 alloy |
| | 6 | 0.90 | 0.06 | 0.40 | 0.25 | 1.00 | 0.25 | 0.03 | 0.006 | Bal. | |
| | 7 | 0.70 | 0.10 | 0.30 | 0.40 | 1.00 | 2.00 | 0.00 | 0.000 | Bal. | |
| | 8 | 0.70 | 0.10 | 0.25 | 1.50 | 1.00 | 0.40 | 0.05 | 0.010 | Bal. | |
| | 9 | 0.90 | 0.06 | 0.40 | 0.80 | 1.00 | 0.80 | 0.03 | - | Bal. | |
| | 10 | 7.50 | 0.06 | 0.00 | 0.00 | 0.35 | 0.00 | 0.10 | - | Bal. | Corresponding to JIS AC4CH |

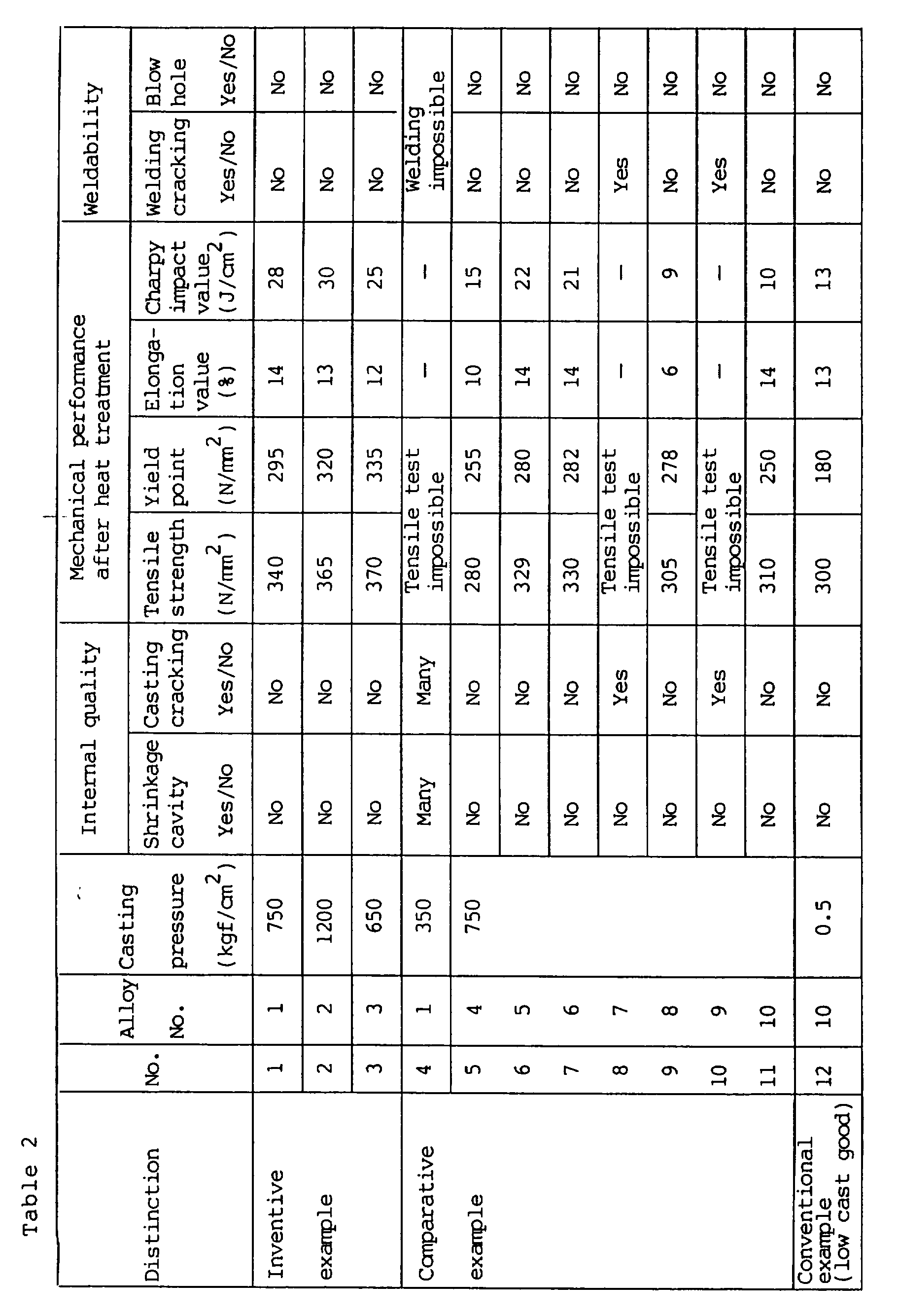

As evident from Table 2, it was identified that, with the wheel discs cast the inventive alloys under predetermined casting conditions, no internal defects were observed, the strength and toughness were excellent drastically over the low-pressure cast good of AC4CH alloy that has been put into practice so far and high-pressure cast goods, and the weldability was also equal to that of goods now in use.

Whereas, in the cases of alloy compositions out of the range of the invention, sufficient strength and toughness are not obtained and the welding crackings are liable to occur.

Moreover, when the casting temperature or casting pressure is low, even if the alloy compositions may be within the range of the invention, it is seen that the internal defects such as shrinkage cavities and casting crackings generate frequently, tending to deteriorate the mechanical performance.

### Example 2

Of the wheel discs obtained in Inventive example No. 1, Comparative example Nos. 6 and 7 and Conventional example No. 12 shown in Table 2, the tensile strengths, yield points and Charpy impact values being index values of toughness at the rim portion with the least wall thickness and the hub portion with thick wall were measured, respectively. The results are shown in Table 3.

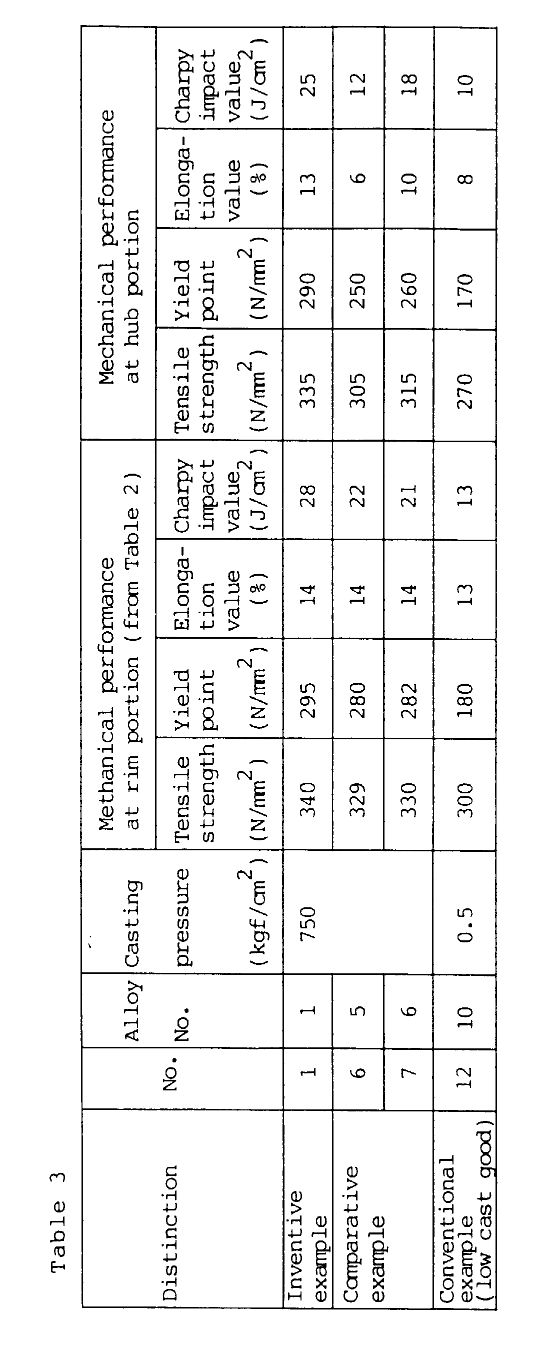

As evident from Table 3, it can be seen that, in the cases of low-pressure cast good of AC4CH alloy that has been put into practice so far and high-pressure cast goods of conventional 6000-series malleable alloy, the hub portion with thick wall shows a tendency to decrease the strength, elongation and toughness over the rim portion with thin wall that has faster cooling velocity, whereas, with the wheel disc cast the inventive alloy under predetermined conditions, the differences in the strength and toughness due to wall thickness are small, resulting in uniform quality throughout the product.

As described, with the alloy material in accordance with the invention, the strength and toughness can improve together and the dispersion of the performance of material inside the product can be made remarkably small as well over the conventional aluminum alloy castings, thereby it can be used suitably for the wheel of vehicles that requires the reliability throughout the product, in more detail, for the wheel discs for 2-piece wheel and 3-piece wheel, it allows to aim at the thinning of wall and decrease the production cost of prime material as well, and the like, exerting conspicuous effects industrially.

## Claims

1. A high-pressure cast aluminum alloy for wheel disc comprising Si: 0.6 - 1.0 wt. %, Mg: 0.8 - 1.2 wt. %, Cu: 0.1 - 0.5 wt. %, Zn: 0.4 - 1.2 wt. %, Mn: 0.4 - 1.2 wt. %, Ti: 0.01 - 0.20 wt. %, B: 0.002 - 0.04 wt. % and the balance of Al and inevitable impurities.

2. The high-pressure cast aluminum alloy for wheel disc of Claim 1, wherein the content of Mn is made to be over 0.6 wt. % and not more than 1.2 wt. %.

3. The high-pressure cast aluminum alloy for wheel disc of Claim 1 or 2, wherein the wheel disc is a wheel disc for 2-piece or 3-piece wheel.

4. A wheel disc for 2-piece or 3-piece wheel produced from the aluminum alloy of any of Claim 1, 2 or 3.

5. A wheel joined to the wheel disk of Claim 4 with a rim by welding or bolt nut.

6. A method of producing high-pressure cast aluminum alloy for wheel disc comprising the steps of filling a melt of aluminum alloy comprising Si: 0.6 - 1.0 wt. %, Mg: 0.8 - 1.2 wt. %, Cu: 0.1 - 0.5 wt. %, Zn: 0.4 - 1.2 wt. %, Mn: 0.4 - 1.2 wt. %, Ti: 0.01 - 0.20 wt. %, B: 0.002 - 0.04 wt. % and the balance of Al and inevitable impurities into mold, and then solidifying it under a pressure of 500 kgf/cm² or higher.

7. The method of producing high-pressure cast aluminum alloy for wheel disc of Claim 6, wherein the temperature of the melt of aluminum alloy is made to be within the liquidus line temperature of said aluminum alloy plus 100 °C at the sprue portion in mold to fill into said mold.

## Patentansprüche

1. Aluminium-Druckgußlegierung für eine Radscheibe, umfassend Si: 0,6-1,0 Gew.-%, Mg: 0,8-1,2 Gew.-%, Cu: 0,1-0,5 Gew.-%, Zn: 0,4-1,2 Gew.-%, Mn: 0,4-1,2 Gew.-%, Ti: 0,01-0,20 Gew. -%, B: 0,002-0,04 Gew. -%, und als Rest Al sowie unvermeidbare Verunreinigungen.

2. Aluminium-Druckgußlegierung für eine Radscheibe nach Anspruch 1, wobei der Gehalt an Mn so eingestellt ist, daß er über 0,6 Gew. -% und nicht mehr als 2,1 Gew.% beträgt.

3. Aluminium-Druckgußlegierung für eine Rads cheibe nach Anspruch 1 oder 2, wobei die Radscheibe eine Radscheibe für ein 2-teiliges oder 3-telliges Rad ist.

4. Radscheibe für 2-teiliges oder 3-teiliges Rad, hergestellt aus der Aluminiumlegierung nach mindestens einem der Ansprüche 1, 2 oder 3.

5. Rad, das mit der Radscheibe nach Anspruch 4 mittels einer Felge durch Schweißen oder einer Bolzenmutter verbunden ist.

6. Verfahren zur Herstellung einer Aluminium-Druckgußlegierung für eine Radscheibe, umfassend die Schritte des Einfüllens einer Schmelze einer Aluminiumlegierung, umfassend Si: 0,6-1,0 Gew.-%, Mg: 0,8-1,2 Gew.-%, Cu: 0,1-0,5 Gew.-%, Zn: 0,4-1,2 Gew.-%, Mn: 0,4-1,2 Gew.-%, Ti: 0,01-0,20 Gew.-%, B: 0,002-0,04 Gew.-%, und als Rest Al sowie unvermeidbare Verunreinigungen, in eine Form, und danach Verfestigenlassen dieser unter einem Druck von 500 kgf/cm² oder höher.

7. Verfahren zur Herstellung einer Aluminium-Druckgußlegierung für eine Radscheibe nach Anspruch 6, wobei die Temperatur der Schmelze der Aluminiumlegierung so eingestellt wird, daß sie innerhalb der Liquiduslinientemperatur der Aluminiumlegierung plus 100°C am Eingußtrichterbereich in der Form liegt, um diese in die Form einzufüllen.

## Revendications

1. Alliage d'aluminium coulé sous haute pression, destiné à former une jante, comprenant Si: 0,6 à 1,0% en poids, Mg: 0,8 à 1,2% en poids, Cu: 0,1 à 0,5% en poids, Zn: 0,4 à 1,2% en poids, Mn: 0,4 à 1,2% en poids, Ti: 0,01 à 0,20% en poids, B: 0,002 à 0,04% en poids et le complément d'Al et d'impuretés inévitables.

2. Alliage d'aluminium coulé sous haute pression, destiné à former une jante, selon la revendication 1, dans lequel la teneur en Mn est choisie de façon à être supérieure à 0,6% en poids et de pas plus que 1,2% en poids.

3. Alliage d'aluminium coulé à haute pression, destiné à former une jante, selon la revendication 1 ou 2, dans lequel la jante est une jante pour une roue en 2 pièces ou en 3 pièces.

4. Jante pour une roue en 2 pièces ou en 3 pièces, fabriquée à partir d'un alliage d'aluminium selon l'une quelconque des revendications 1, 2 ou 3.

5. Roue assemblée à une jante selon la revendication 4 avec une collerette, par une soudure ou un ensemble boulon / écrou.

6. Procédé de fabrication d'un alliage d'aluminium coulé à haute pression destiné à former une jante, comprenant les étapes consistant à remplir dans un moule un alliage d'aluminium fondu comprenant Si: 0,6 à 1,0% en poids, Mg: 0,8 à 1,2% en poids, Cu: 0,1 à 0,5% en poids, Zn: 0,4 à 1,2% en poids, Mn: 0,4 à 1,2% en poids, Ti: 0,01 à 0,20% en poids, B: 0,002 à 0,04% en poids et le complément d'Al et d'impuretés inévitables, et consistant ensuite à le solidifier sous une pression de 500 kgf/cm² ou plus.

7. Procédé de fabrication d'un alliage d'aluminium coulé à haute pression destiné à former une jante, selon la revendication 6, dans lequel la température de l'alliage d'aluminium fondu, à remplir dans ledit moule, est réglée de façon à être située entre la température de la ligne du liquidus dudit alliage d'aluminium et celle-ci plus 100°C, au niveau de la zone de coulée dans le moule.
